# EUROPÄISCHE PATENTANMELDUNG

(11) **EP 0 909 599 A1**
(43) Veröffentlichungstag der Anmeldung: **21.04.1999**
(21) Anmeldenummer: 98117354.5
(22) Anmeldetag: 14.09.1998
(51) Int. Cl.: B22D 17/26, B29C 45/04, B29C 33/26, B29C 33/28

(54) **Formschliessmaschine**

(30) Priorität: 17.10.1997 DE 19745983; 13.02.1998 DE 19805936
(71) Anmelder: Wilhelm Hedrich Vakuumanlagen GmbH & Co.KG, 35630 Ehringshausen-Katzenfurt (DE)
(72) Erfinder: Steindorf, Hans Joachim, 35764 Sinn (DE)
(74) Vertreter: Missling, Arne, Dipl.-Ing.

(57) **Zusammenfassung**

Als Formschließmaschinen ausgebildete Gießmaschinen verlangen eine ungestörte Handhabung der Gießformhälften sowohl zu deren Reinigung als auch zur Vorbereitung eines Gießvorganges; sie sollen außerdem gut entlüftbar sein. Dazu wird eine Anordnung so konzipiert, bei der die einzelnen Gießformteile der geöffneten Gießform in mehreren Freiheitsgraden verschwenkbar sind und auch die Position der geschlossenen Gießform manipulierbar ist.

## Beschreibung

Die Erfindung betrifft eine Formschließmaschine mit einer aus zwei Gießformteilen bestehenden Gießform, wobei die Gießformteile auf einem gemeinsamen Tragrahmen relativ zueinander verschiebbar angeordnet und an ihrer gemeinsamen Teilungsfläche mittels einer Spanneinrichtung gegeneinander preßbar sind.

Formschließmaschinen dieser Art sind aus dem Stand der Technik bekannt. In der Regel sind bei diesen bekannten Formschließmaschinen die Gießformteile in der Richtung einer in der Regel an der Gießform ausgebildeten Formachse auf- und zufahrbar, wobei zusätzlich auch noch Gießkerne gezogen und weitere Bewegungen in dieser Richtung ausgeführt werden können.

Bei diesen Formschließmaschinen sind die Innenräume der Gießformteile bei geöffneter Gießform mehr oder weniger (je nach Bauart) schlecht zugänglich, um die fertigen Gießstücke zu entnehmen und die Gießform zu reinigen und für den nächsten Gießvorgang vorzubereiten. Bei sehr großen Formschließmaschinen ist der Zwischenraum zwischen den Gießformteilen der geöffneten Gießform begehbar. Von diesem Zwischenraum aus sind die Innenräume der Gießformteile für das Bedienpersonal zwar zugänglich, allerdings nur dann, wenn dazu im Zwischenraum zwischen den Gießformteilen gearbeitet wird. Der Zwischenraum zwischen den selbst voll auseinandergezogenen Gießformteile bleibt jedoch gleichwohl beschränkt, so daß eine ausreichende Bewegungsfreiheit nicht gewährleistet ist und teilweise sogar in gebückter Haltung gearbeitet werden muß. Ferner ist das Bedienpersonal dabei der Wärme der beheizten Gießformhälften ausgesetzt und wird dadurch entsprechend nachteilig beeinträchtigt.

Die Erfindung hat sich deshalb die Aufgabe gestellt, diese Nachteile zu vermeiden und eine Formschließmaschine der eingangs näher bezeichneten Art so auszuführen, daß die Gießformteile nach dem Abgießen bequem zugänglich gemacht werden können, um die fertigen Gießstücke ohne Schwierigkeit entnehmen und die Gießform für den nächsten Gießvorgang vorbereiten zu können, ohne daR dabei das Bedienpersonal ungebührlich physisch in Anspruch genommen werden muß, sondern statt dessen ohne Beeinträchtigung seiner Bewegungsfreiheit arbeiten kann. Dabei soll die Formschließmaschine so konzipiert werden können, daR der gesamte Arbeitsprozeß automatisierbar ist. Ein weiteres Ziel der Erfindung ist es, die Formschließmaschine so auszubilden, daß die Entlüftung der Gießform während des Befüllens mit Gießmasse erleichtert wird.

Erfindungsgemäß wird die Aufgabe dadurch gelöst, daß die Gießformteile einzeln oder gemeinsam, vorzugsweise mittels eines Motorantriebes, um jeweils eine Halteachse schwenkbar sind, die mit der Verschieberichtung, in der die Gießformteile bewegbar sind, einen - vorzugsweise rechten - Winkel einschließt.

Die Gießformteile können auf diese Weise aus ihrer für den Gießvorgang erforderlichen Stellung nicht nur auseinandergezogen, sondern darüber hinaus auch noch so (seitlich) weggeklappt werden, daß ihre in die Teilungsflächen eingetieften Formräume tatsächlich ohne störende Hindernisse einsehbar und zugänglich sind.

Die Beweglichkeit der Gießform kann ferner auch noch dadurch erhöht werden, daß der Tragrahmen oder ein die Gießform tragendes Teil des Tragrahmens neigbar und/oder dieser um eine Schwenkachse verdrehbar ist. In der Regel wird man die Schwenkachse im wesentlichen horizontal anordnen; sie kann aber auch gegen die Horizontale um einen spitzen Winkel neigbar sein, um die Stellung der Gießform so zu manipulieren, daß diese bequem handhabbar sind.

Es ist besonders vorteilhaft, wenn die Schwenkachse von zwei in jeweils einem Schwenklager gelagerten Schwenkzapfen gebildet wird, die Schwenklager an im wesentlichen senkrechten Ständern einzeln oder gemeinsam höhenbeweglich vorgesehen sind und mindestens ein Schwenkzapfen mit einem Schwenkantrieb antriebsverbunden ist, so daß der Tragrahmen sowohl angehoben und abgesenkt als auch allein durch eine ungleiche Höhenverstellung der Schwenklager geneigt und darüber hinaus durch den Schwenkantrieb auch verschwenkt werden kann.

Im allgemeinen ist an der Gießform eine Formachse definiert, und es ist am besten, wenn die Verschieberichtung zu dieser Formachse parallel ist.

Bei einer besonders bevorzugten Ausführung der erfindungsgemäßen Formschließmaschine sind die Gießformteile an ihrer der gemeinsamen Teilungsfläche abgewandten Seite jeweils an einer Halteplatte befestigt, die vorteilhaft auch noch heizbar ist. Auf diese Weise können verschiedene Gießformen verwendet werden, ohne daß dazu an der Formschließmaschine umfangreiche Anpassungen erfolgen müßten. Die Halteplatten können dabei jeweils mittels eines Lagerzapfens oder dergleichen an der unmittelbar oder über einen beweglichen Schlitten an dem Tragrahmen gelagerten schwenkbaren Halteachse befestigt sein, wobei jede der Halteachsen von einem Schwenkantrieb antreibbar ist, der zwischen dem jeweiligen Lagerzapfen und dem Tragrahmen angebracht ist.

Im einzelnen kann die Anordnung so ausgeführt sein, daß mindestens eine Halteachse mittels eines ersten Lagerbockes an dem Tragrahmen und eine weitere Halteachse mittels eines zweiten Lagerbockes an dem Schlitten fixiert ist, der auf dem Tragrahmen in der Verschieberichtung beweglich ausgebildet ist; die Schwenkantriebe werden dann am besten jeweils an dem zugehörigen Lagerbock befestigt, so daß sie selbst keine Drehbewegung um die Halteachse ausfuhren können.

Auch die Spanneinrichtung wird zweckmäßig an dem Tragrahmen fixiert und kann beispielsweise als (hydraulischer) Kolbenmotor ausgebildet sein. Statt dessen kann die Spanneinrichtung einen motorischen Linearantrieb aufweisen, wobei ein motorgetriebenes Zahnritzel mit einer Zahnstange zusammenwirkt, so daß die Preßkraft auf die Gießformteile beim Schließen der Gießform über den Schlitten direkt in den Tragrahmen übergeleitet wird.

Bei einer besonders praktischen Ausführung der Erfindung befindet sich der Tragrahmen unterhalb der Schwenkachse; er kann dazu mittels jeweils eines Schwenkarmes an den Schwenkzapfen gehaltert sein, die, wie oben gezeigt, in höhenbeweglichen Schwenklagern geführt sind. Diese Höhenbeweglichkeit kann besonders einfach dadurch erzielt werden, daß an den Ständern jeweils Hubeinrichtungen zur Anhebung und Absenkung der Schwenklager vorgesehen sind.

Es ist praktisch, wenn die Gießformteile einzeln oder gemeinsam um ihre Formachse verschwenkbar sind. Für diese Verschwenkung und im allgemeinen ist ein mechanischer Antrieb erforderlich, der ohne weiteres an einem der Lagerzapfen vorgesehen werden kann.

Bei einer anderen vorteilhaften Ausführung der erfindungsgemäßen Formschließmaschine besteht der Tragrahmen aus einem Grundrahmen und einer an dem Grundrahmen um eine im wesentlichen horizontale Kippachse schwenkbaren, zweiarmigen Wippe. Hier kann zum einen wie bisher beschrieben der Tragrahmen als Ganzes geneigt werden, wenn er an Schwenklagern aufgehängt ist, die in unterschiedliche Höhen bringbar sind. Zusätzlich oder alternativ ist nun aber zum anderen noch die Wippe verschwenkbar, so daß die Neigung der Gießform auf diese Weise gewonnen oder verstärkt werden kann. Die Anordnung kann also auch so getroffen werden, daß nicht der gesamte Tragrahmen neigbar ist, sondern allein dessen Wippe, wobei der Grundrahmen in seiner normalen Lage verbleibt.

Im einzelnen kann eine solche Ausführung besonders günstig sein, wenn die (der Schwenkachse entsprechende) Kippachse von Kippzapfen ausgebildet wird, die in an dem Grundrahmen fixierten Zapfenlagern schwenkbar sind. Die Kippachse verläuft Zweckmäßig quer zu der Formachse.

Eine bequeme, stetige Veränderung der Neigung der Gießform erreicht man, wenn an der Wippe ein (motorischer) Stellantrieb zum Kippen der Wippe vorgesehen ist, etwa in der Form, daß sich an dem Stellantrieb ein Zahnritzel befindet, das mit einem an dem Grundrahmen fixierten Zahnstangen-Segment zusammenwirkt.

Die Erfindung ist nicht auf die Anordnung einer einzigen Gießform auf dem Tragrahmen beschränkt; es kann statt dessen besonders rationell sein, wenn auf dem gleichen Tragrahmen mindestens zwei Gießformen vorgesehen sind, wobei die Gießformen wechselweise in Schließstellung und/oder in Öffnungsstellung ihrer Gießformteile halterbar sind.

Insbesondere bei der Anordnung von zwei Gießformen, deren Formachsen aufeinander senkrecht stehen, kann während des Befüllens der ersten Gießform die zweite für den Gießvorgang vorbereitet werden, ohne daß die Arbeit an einer Gießform diejenige an der anderen Gießform behindert.

Die Verschieberichtung ist zweckmäßig im wesentlichen waagerecht ausgebildet.

Die Handhabung der Gießformen ist besonders sicher, wenn ihre paarweisen Halteplatten jeweils bei geschlossener Gießform miteinander verriegelbar sind; die Spanneinrichtung muß dann nur dafür sorgen, daß die Teilungsflächen der Gießformteile solange aneinandergepreßt werden, bis die Verriegelungen wirksam sind. Die Art der Verriegelung ist dabei nachrangig. Vorteilhaft ist allerdings eine selbsttätige Ver- und eine manuelle oder mechanische, von Hand ausgelöste Entriegelung.

Insgesamt bietet die erfindungsgemäße Formschließmaschine die Vorteile eines sehr kurzen Zeitaufwandes bei der Bereitstellung einer Gießform, beträchtliche Arbeitserleichterung für das Bedienpersonal und eine hohe Sicherheit bei der Vorbereitung der Gießform und während des Gießvorganges; sie kann für ganz unterschiedliche Gießformen relativ beliebiger Größenordnung verwendet werden, die durchweg in eine passende (auch während des Gießvorganges zum Entlüften geeignete) Position manipuliert werden können, wenn nach dem Abgießen die Gießstücke entnommen und die Gießformteile gesäubert und für den nächsten Gießvorgang vorbereitet werden müssen.

Die Erfindung wird nachstehend an Hand der Zeichnung an einem Ausführungsbeispiel einer erfindungsgemäßen Formschließmaschine näher erläutert. Es zeigen
- Fig. 1: eine erste Ausführung in der Hauptansicht bei geschlossener Gießform,
- Fig. 2 und Fig. 3: eine Draufsicht zu Fig.1 bei (Fig.2) geschlossener und (Fig.3) geöffneter Gießform und verschwenkten Gießformteilen,
- Fig.4: eine etwas vergrößerte Seitenansicht zu Fig.1,
- Fig.5: eine zweite Ausführung in der Hauptansicht in geschlossener Stellung,
- Fig.6: eine Draufsicht auf Fig.5,
- Fig.7: die Anordnung der Fig.5 in geöffneter Stellung mit unverschwenkten Halteplatten für die Gießform,
- Fig.8: eine Draufsicht zu Fig.7,
- Fig.9 und Fig.10: je eine linke und rechte Seitenansicht zu den Fig.5,7
- Fig.11: die Anordnung der Fig.7, aber mit (nach vorn) verschwenkten Halteplatten,
- Fig.12: eine Draufsicht zu Fig.11,
- Fig.13: die Anordnung der Fig.7, aber mit (nach hinten) verschwenkten Halteplatten,
- Fig.14: eine Draufsicht zu Fig.13,
- Fig.15 und Fig.16: je eine linke und rechte Seitenansicht zu Fig.11 und mit um 90° verschwenkten Halteplatten,
- Fig.17 und Fig.18: je eine Seitenansicht entsprechend Fig.9 und Fig.10, aber mit um ihre Formachse verschwenkter Halteplatte und
- Fig.19 und Fig.20: je eine Hauptansicht entsprechend Fig.1, jedoch mit nach rechts (Fig.19) und nach links (Fig.20) gekippter Wippe,
sämtlich in schematisch vereinfachter Darstellung (ohne Gießform).

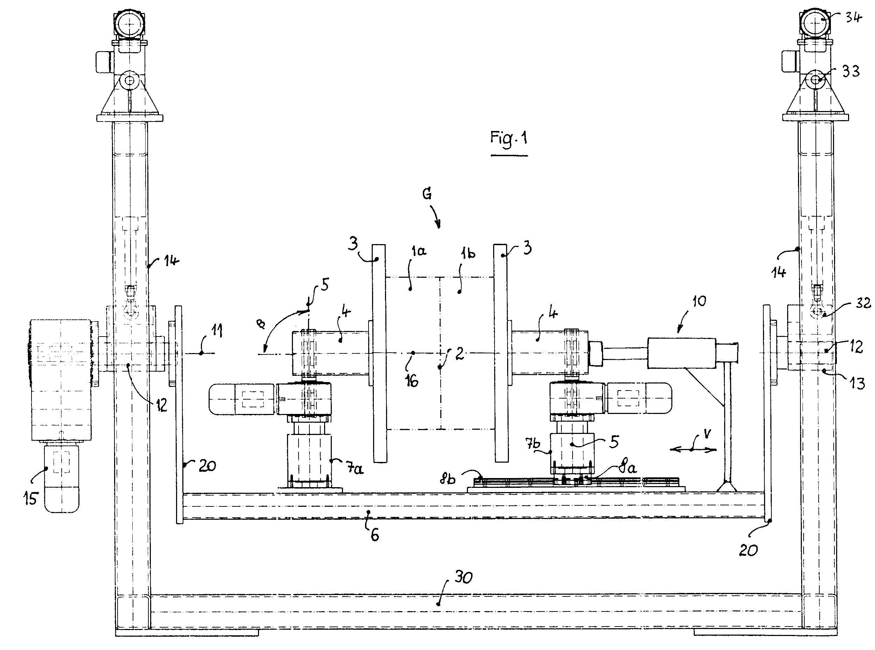

In der Ausführung der Fig.1-4 sind zwei Gießformteile 1 (hier als Gießformhälften 1a,b einer Gießform G ausgebildet) jeweils an einer Halteplatte 3 befestigt, die beheizbar sein kann. Die Gießformhälften 1 sind an den Halteplatten 3 leicht auswechselbar und stoßen im geschlossenen Zustand der Gießform G mit ihren Teilungsflächen 2 unter dem Druck einer Spanneinrichtung 10 aneinander, so daß die Gießform G einen nach außen im wesentlichen geschlossenen Formraum aufweist, der lediglich wie üblich die erforderlichen Einguß- und Entlüftungsöffnungen usw. aufweist. Die Gießformhälften 1 sind in den Fig.1-4 nur in ihren Umrissen strichpunktiert angedeutet; auf die Ausführung einer zwischen ihren Halteplatten 3 vorgesehenen Verriegelung ist hier verzichtet.

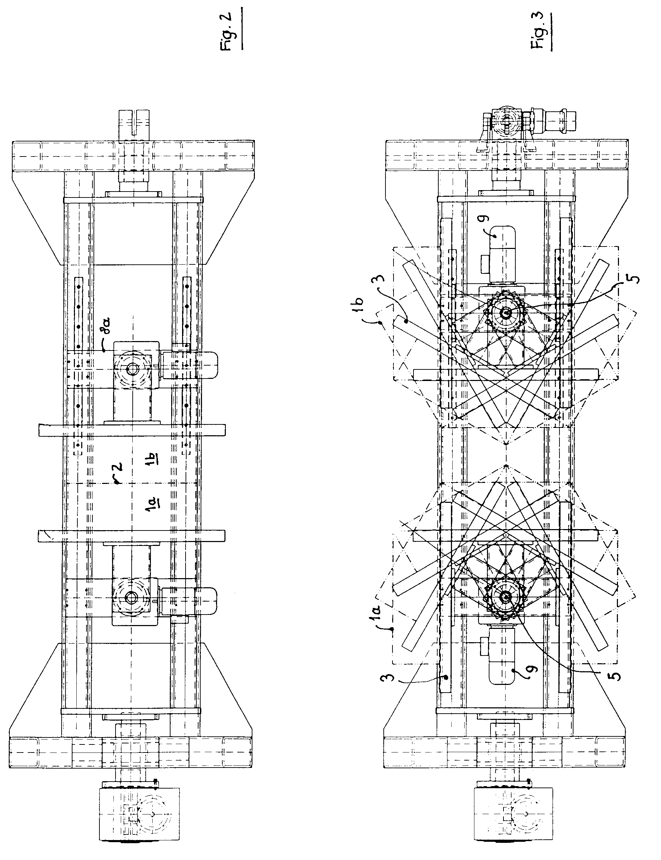

In der Flucht einer an der Gießform G ausgebildeten Formachse 16 sind an den Halteplatten 3 auf ihrer der Gießform G abgewandten Seite Lagerzapfen 4 angeflanscht, die jeweils auf einer quer zu der Formachse 16 gelagerte, zu einer Verschieberichtung V der Gießformhälfte 1b um den Winkel β (von hier 90°) geneigte Halteachse 5 drehfest aufgesteckt und gehaltert sind. Die Halteachsen 5 ihrerseits werden von Lagerböcken 7 gehalten, wobei ein Lagerbock 7a direkt auf einem Tragrahmen 6 befestigt ist, der sich in seiner Normallage der Fig.1-4 unterhalb der Gießform G befindet und aus in dieser Stellung etwa waagerecht verlaufenden Profilen besteht (Fig.2,3). Auf dem Tragrahmen 6 ist ein aufliegender Schlitten 8a auf einer Schlittenbahn 8b in der Verschieberichtung V so hin- und herbeweglich, daß die Gießformhälfte 1b, deren zugehörige Halteachse 5 in dem auf dem Schlitten 8a befestigten Lagerbock 7b gehaltert ist, von der in Verschieberichtung V unbeweglichen Gießformhälfte 1a weg- oder auf diese zubewegbar ist.

Der im wesentlichen ebenflächige, rechteckige Tragrahmen 6 hängt an zwei beiderseits an seinen Stirnseiten sich senkrecht erstreckenden Schwenkarmen 20, an denen andererseits je ein Schwenkzapfen 12 befestigt und in einem Schwenklager 13 drehbar gelagert ist. Die Schwenklager 13 sind in senkrechten Ständern 14 geführt, die, durch einen Gestellrahmen 30 miteinander zu einem starren Gestell 14,30 verbunden, beiderseits des Tragrahmens 6 vorgesehen sind.

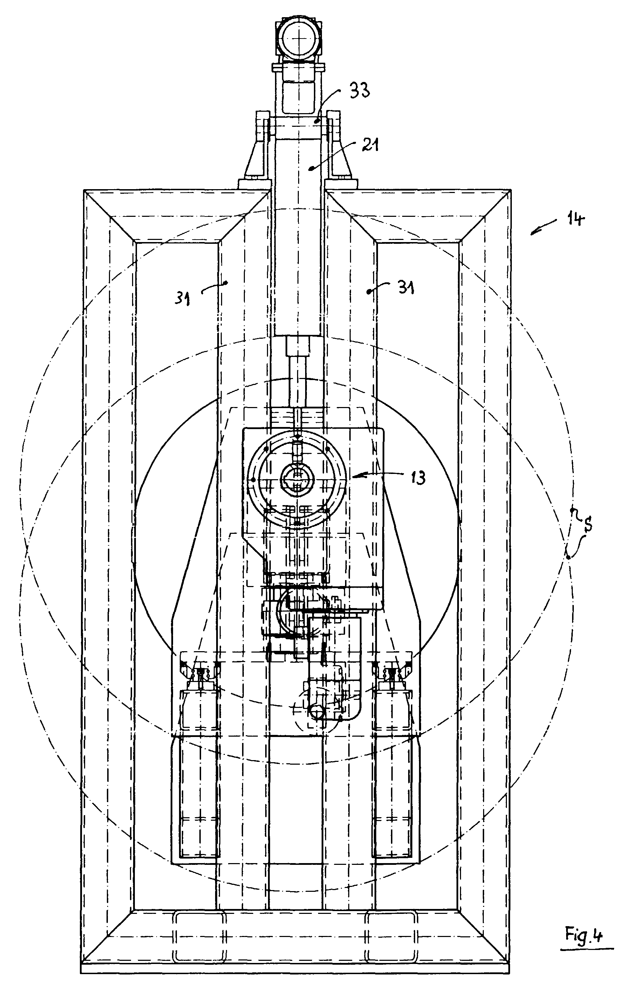

Jeder der Ständer 14 wird von einer Rahmenkonstruktion aus Kastenprofilen gebildet, wobei (Fig.4) zwei innere Rahmenprofile 31 als Führung für das an dem zugehörigen Ständer 14 höhenbewegliche Schwenklager 13 dient. Die Schwenklager 13 können mittels eines jeweils an dem betreffenden Ständer 14 gehalterten Hubeinrichtung 21 gemeinsam oder einzeln auf- und abbewegt werden. Die Schwenkzapfen 12 ergeben eine in der Fig.1 angedeutete (hier waagerechte eingestellte) Schwenkachse 11, deren Abweichung von der Horizontalen davon abhängt, wie groß die Höhendifferenz der Schwenkzapfen 12 ist. Es versteht sich, daß die Neigung der Schwenkachse 11 nicht beliebig ist und eine gelenkige Verbindung zwischen den Schwenkarmen 20 und den Schwenkzapfen 12 oder an passender anderer Stelle erfordert. Die Einzelheiten einer solchen Anordnung gehören zum technischen Standard und sind in der Zeichnung nicht im einzelnen ausgeführt. Die Hubeinrichtung 21 wirkt über ein Gelenk 32 auf das zugehörige Schwenklager 13 und ist andererseits an einem Gelenklager 33 angebunden, so daß auf das Schwenklager 13 keine Seitenkräfte wirken. Die teleskopische Hubeinrichtung 21 wird von einem Hubmotor 34 angetrieben.

In der Fig.2 sind die Gießformhälften 1 an ihren Teilungsflächen 2 noch aneinanderliegend, weil die Gießformhälfte 1b zusammen mit dem Schlitten 8a von der Gießformhälfte 1a noch nicht abgezogen worden ist. In der Fig.3 ist die Gießformhälfte 1b dagegen von der Gießformhälfte 1a wegbewegt; außerdem aber sind beide Gießformhälften 1 zusammen mit der jeweils zugehörigen Halteplatte 3 um die (senkrechte) Halteachse 5 mittels des zugehörigen (in der Fig.2 weggelassenen) Motorantriebes 9 verschwenkt; mehrere Stellungen mit unterschiedlichem Verschwenkwinkel (maximal jeweils 90° in beiden Drehrichtungen) sind in der Fig.3 eingezeichnet.

Darüber hinaus kann der Tragrahmen 6 und damit auch die Gießform G noch um die Schwenkachse 11 geschwenkt werden; dafür ist (Fig.1) ein Schwenkantrieb 15 an einem der Schwenkzapfen 12 vorgesehen (in der Fig.1 links). Die Fig.4 veranschaulicht durch die strichpunktiert angedeuteten Schwenkkreise S, daß der Tragrahmen 6 jeweils um 360° verschwenkbar ist, hier in zwei unterschiedlichen Höhenlagen der Schwenkzapfen 12 eingezeichnet, so daß die Schwenkachse 11 geneigt ausgebildet ist, genauso wie der zu ihr parallele Tragrahmen 6.

Es ist leicht zu erkennen, daß die Gießformhälften 1 in relativ beliebige Positionen bringbar sind, in denen die in ihre Teilungsflächen 2 eingetieften Formen bequem zugänglich sind; es läßt sich demzufolge auch leicht einrichten, daß diese auf der einen Seite der Formschließmaschine geöffnet zur Reinigung und Gießvorbereitung bereitstehen und/oder auf der anderen Seite an einen Gießautomaten angeschlossen werden können.

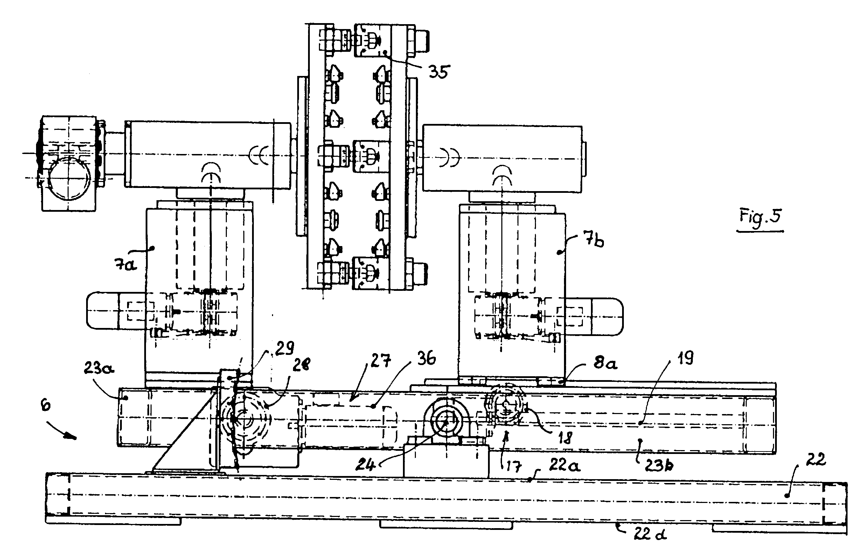

Etwas detaillierter ist in der Zeichnung die leicht veränderte Ausführung der Fig.5-20 dargestellt. Sie stimmt weitgehend mit der oben erläuterten ersten Ausführung überein, so daß die Beschreibung auf die davon abweichenden Merkmale beschränkt werden kann.

Der Tragrahmen 6 ist hier zweigeteilt aus einem Grundrahmen 22 und einer Wippe 23 zusammengesetzt und kann sowohl in Verbindung mit einem System von Ständern 14 wie in der Ausführung der Fig.1-4 als auch wie hier als eigenständiger Maschinenrahmen ausgeführt sein, wobei im letzteren, dargestellten Fall eine Neigung der Gießform allein durch Betätigung der Wippe 23 erfolgt, die hier also die Funktion der Schwenkarme, -zapfen und -lager 12,13,20 in der oben beschriebenen ersten Ausführung wahrnimmt.

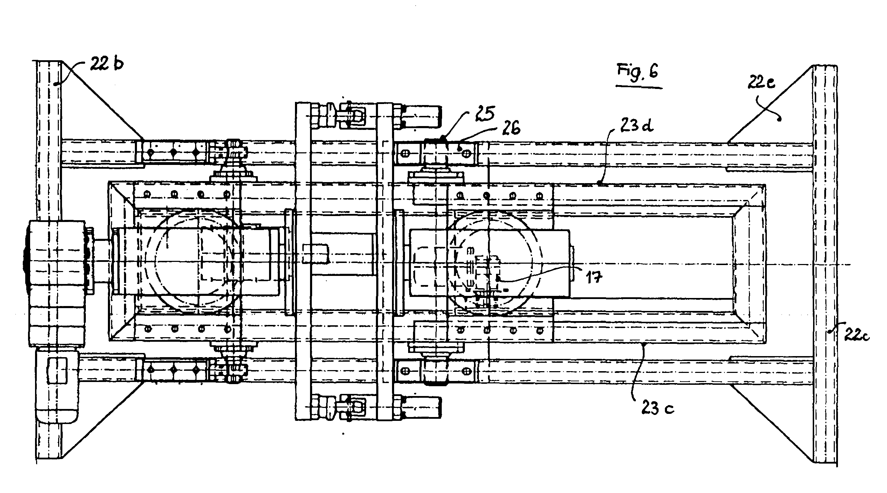

Die einen zweiarmigen Hebel bildende Wippe 23 ist zwischen zwei Wippenarmen 23a,b um eine Kippachse 24 schwenkbar, die von zwei beiderseits an den Längsseiten 23c,d (Fig.6) der flach-rechteckigen Wippe 23 angebrachten, in Zapfenlagern 26 orientierten Kippzapfen 25 gebildet wird. Die Zapfenlager 26 sind auf der Oberseite 22a des ebenfalls etwa flachrechteckigen Grundrahmens 22 befestigt. Sowohl der Grundrahmen 22 als auch die Wippe 23 ist aus Kastenprofilen zusammengesetzt, wobei die Stirnprofile 22b,c des Grundrahmens 22 beiderseits über dessen rechteckigen Umriß hinausragen und zusammen mit an der Unterseite 22d des Grundrahmens 22 angeschweißten Versteifungsblechen 22e eine form- und lagestabile Konstruktion ergeben.

Der erste Lagerbock 7a ist hier unmittelbar auf dem Wippenarm 23a der Wippe 23 befestigt, während der zweite Lagerbock 7b wiederum auf den Schlitten 8a montiert ist, der auf dem Wippenarm 23b parallel zu den Längsseiten 23c,d bewegbar ist. Zu diesem Zweck ist an dem auf der Wippe 23 aufliegenden Lagerbock 7b ein motorischer Linearantrieb 17 installiert, der - beispielsweise - mit einem (ersten) Zahnritzel 18 und einer an der Schlittenbahn 8b oder an einer anderen Stelle der Wippe 23 angebrachten Zahnstange 19 den Schlitten 8a in Bewegung setzen kann, so daß die Gießformhälften wiederum aufeinander zu- oder voneinander wegbewegt werden können. Um die Gießform für den Gießvorgang sicher geschlossen halten zu können, sind an den Halteplatten 3 Verriegelungen 35 vorgesehen. Die Bauweise der Verriegelungen 35 ist beliebig, allerdings ist es zweckmäßig, wenn sie leicht entriegelbar sind und möglichst selbsttätig verriegeln, sobald die Gießform geschlossen wird.

Die Wippe 23 ist in ihrer mittleren Position mit dem Grundrahmen 22 flächenparallel und kann mittels eines Stellantriebes 27 aus dieser Position um die Kippachse 24 verschwenkt werden. Der Stellantrieb 27 ist selbstsperrend, so daß die Wippe 23 bei ausgeschaltetem Stellantrieb 27 ihre Position ohne weitere Hilfsmittel beibehält. Zu diesem Zweck treibt ein in der Wippe 23 gehalterter Stellmotor 36 ein (zweites) Zahnritzel 28 an, das mit einem an dem Grundrahmen 22 ortsfestes Zahnstangen-Segment 29 kämmt.

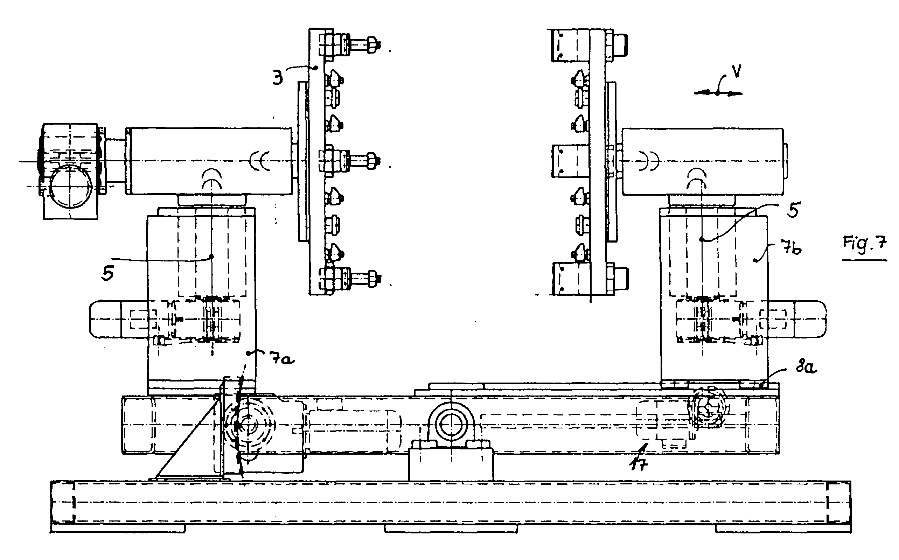

In den Fig.5,6 ist die Lage gezeichnet, in der die (hier und in den übrigen Fig.7-20 weggelassene) Gießform geschlossen wäre, so daß diese bereits in dieser Stellung mit Gießmasse gefüllt werden könnte.. Der Schlitten 8a befindet sich zusammen mit dem zweiten Lagerbock 7b und dem Linearantrieb 17 in der Nähe der Kippachse 24. Die Wippe 23 hält ihre normale (waagerechte) Position, in der sie mit dem auf einem Fundament oder einer Bodenfläche ortsfesten Grundrahmen 22 flächenparallel ist.

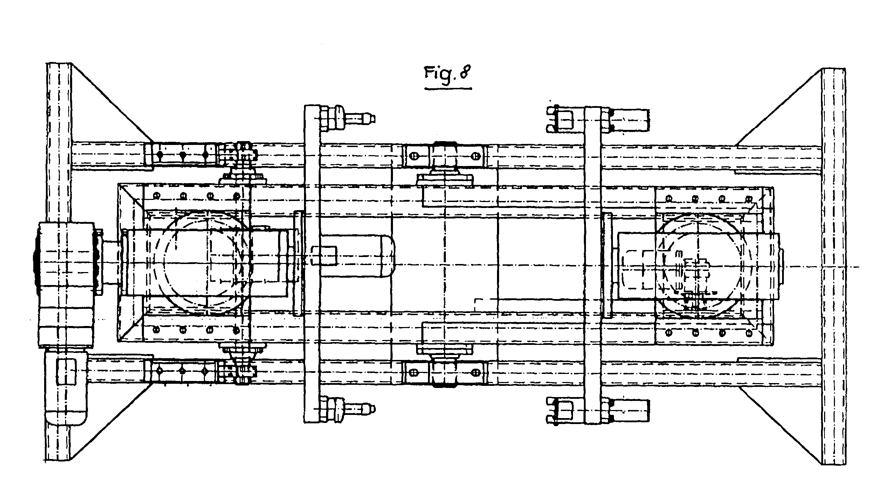

Nach dem Abgießen einer Gießform werden zunächst (Fig.7,8) die an den Halteplatten 3 angeordneten Gießformhälften voneinander an ihren Teilungsflächen in der Verschieberichtung V des Lagerbockes 7b getrennt, wobei der Lagerbock 7a an seiner Stelle verbleibt. Es ist zu erkennen, daß der Linearantrieb 17 mit dem Schlitten 8a und dem Lagerbock 7b weit nach rechts bewegt worden ist, so daß zwischen den Gießformhälften ein großer Zwischenraum entstanden ist, der zwar für eine bequeme Reinigung der Gießformhälften noch nicht ausreicht, aber deren Verschwenkung um die Halteachsen 5 erlaubt.

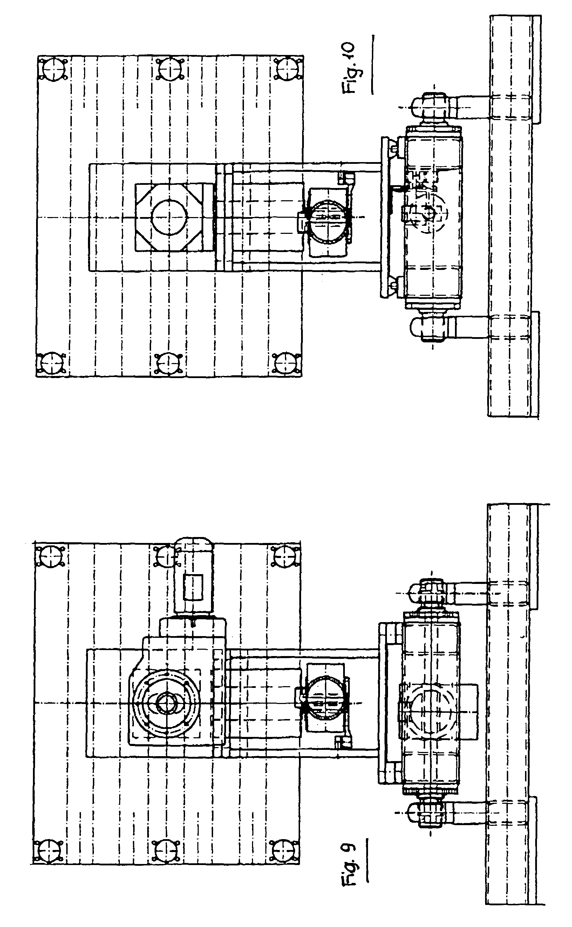

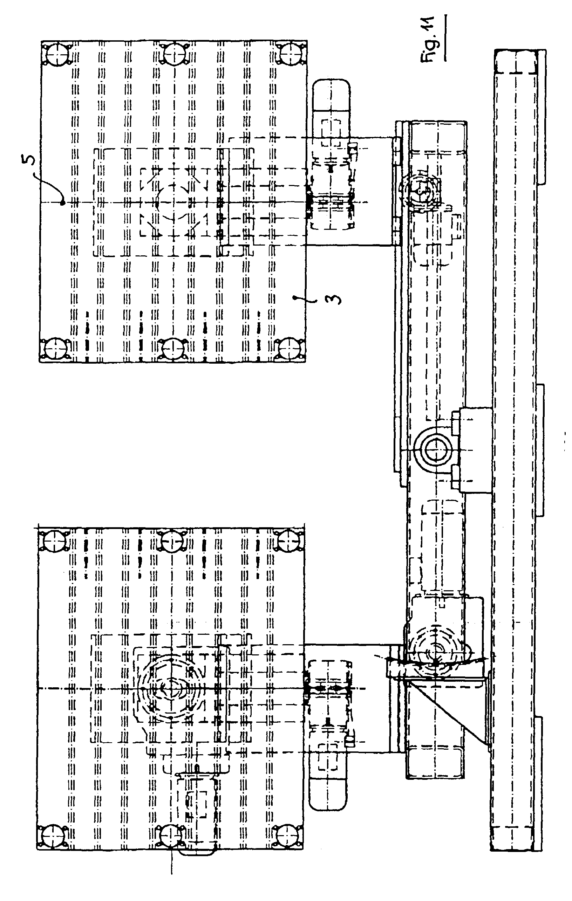

Die Seitenansichten der Fig.9,10 unterscheiden nicht, ob die Gießform geschlossen oder im Sinne der Fig.7,8 geöffnet ist.

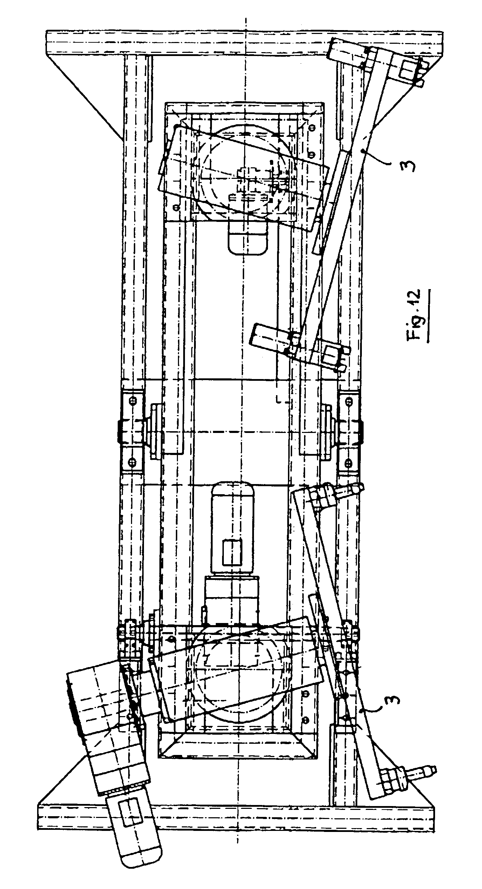

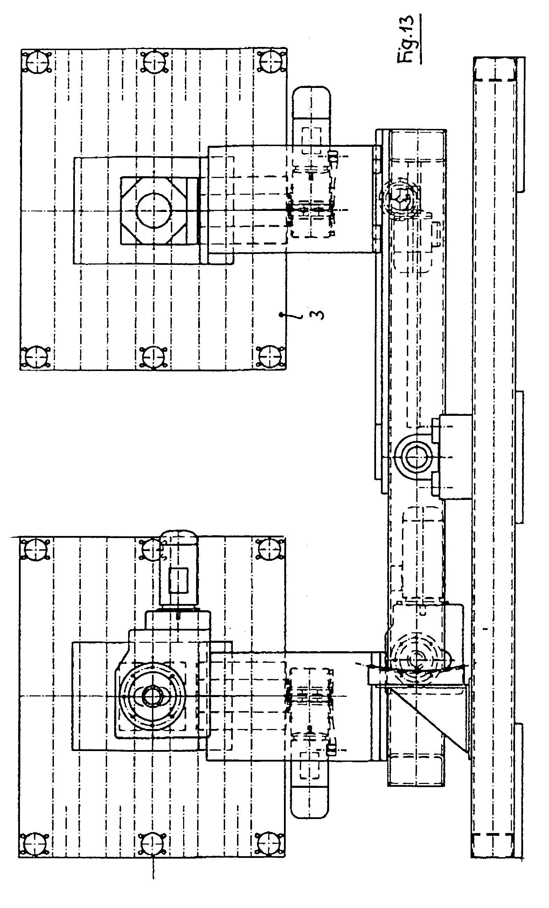

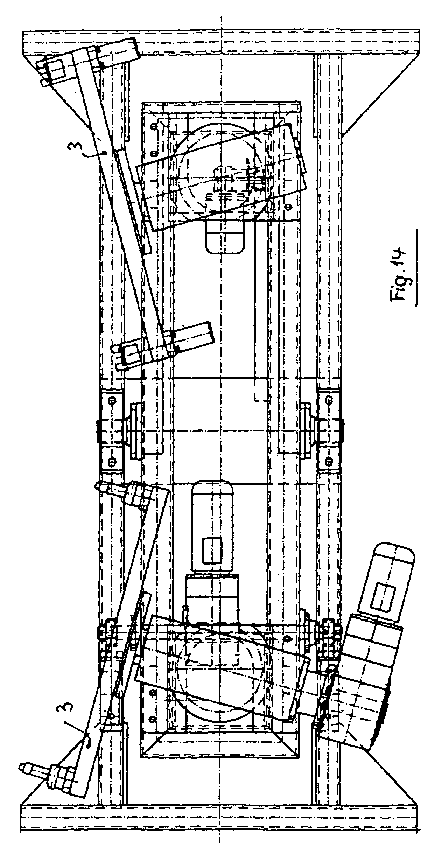

Eine Verschwenkung der Gießformhälften um die jeweiligen Halteachsen 5 ist in den Fig.11-14 durchgeführt. Dabei sind die Halteplatten 3 jeweils um fast einen rechten Winkel verschwenkt, und zwar stets in gegensinniger Drehrichtung, so daß (Fig.11,12) die Gießformhälften nach vorn in eine beispielsweise zur Bedienung geeignete Position oder (Fig.13,14) nach hinten verschwenkt sind.

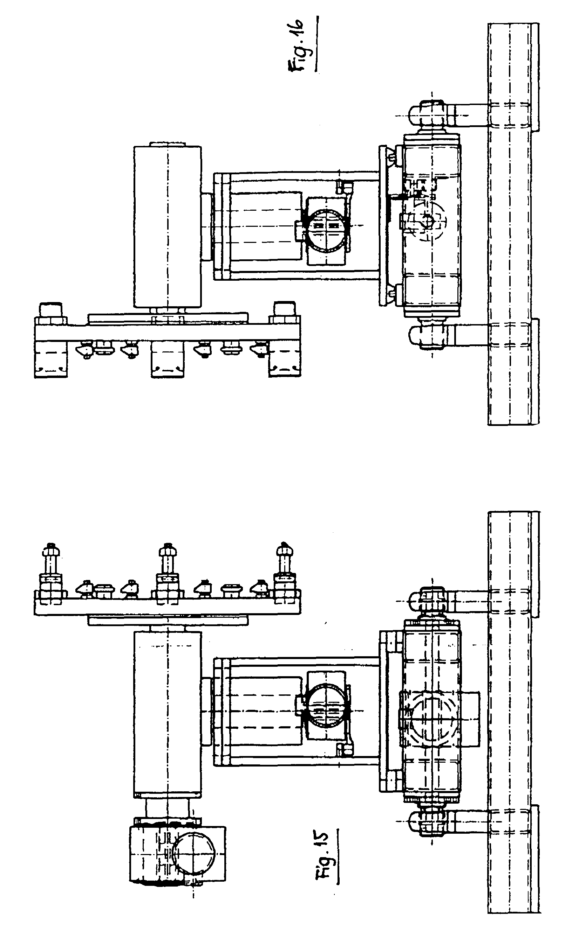

In den Seitenansichten der Fig.15,16 sind, abweichend von Fig.11, der einfachen Darstellung halber die Halteplatten jeweils um 90° gegenüber ihrer Stellung in der Fig.7 gezeichnet worden.

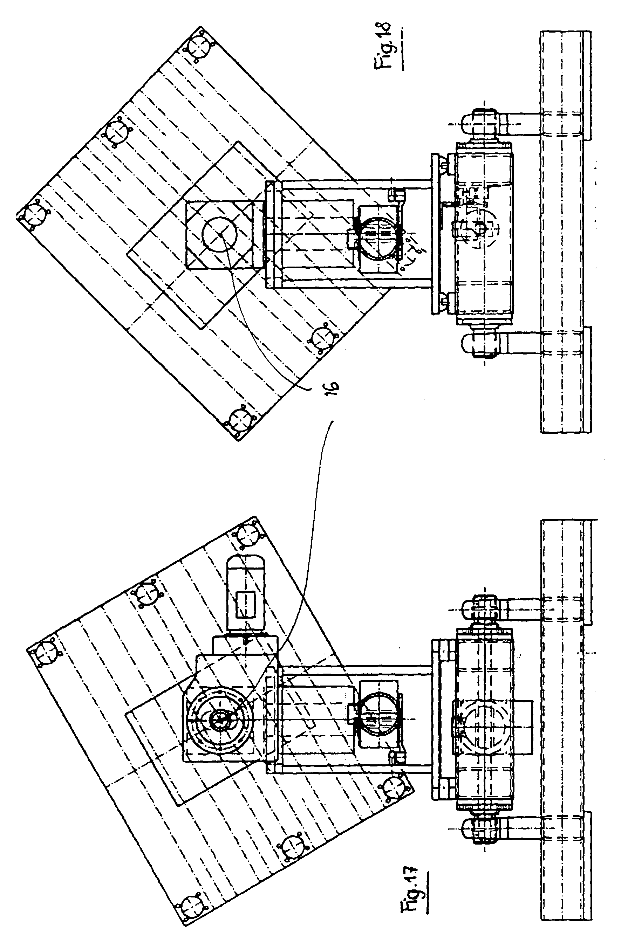

Bei einer Formschließmaschine gemäß der Erfindung ist es ferner möglich, die Gießformhälften einzeln und/oder gemeinsam um die Formachse 16 der Gießform zu verschwenken, wie das z. B. in den Fig.17,18 gezeigt ist, so daß eine weitere Möglichkeit vorgegeben ist, die Gießform bzw. die Gießformhälften in eine gewünschte Stellung zu manipulieren.

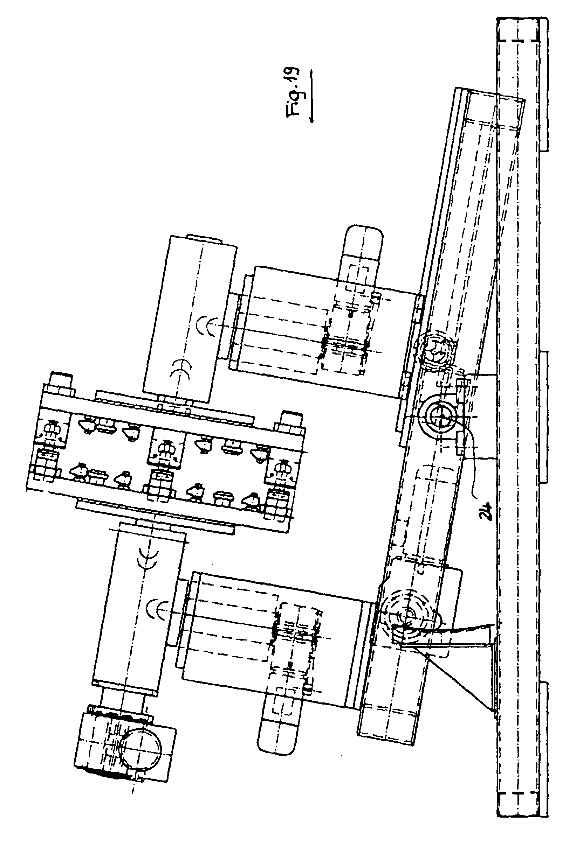

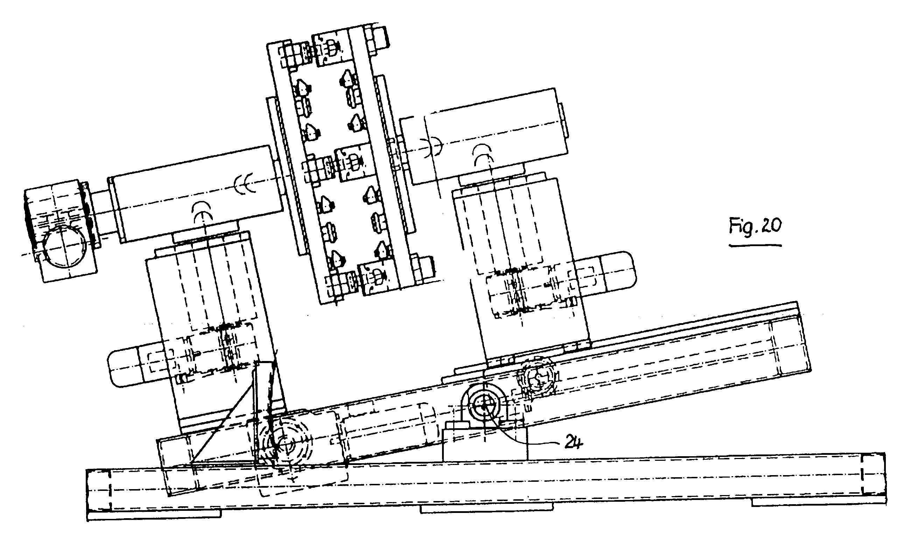

Schließlich ist in den Fig.19,20 zu erkennen, wie die Gießform (und die Gießformhälften gemeinsam) um die Kippachse 24 neigbar sind. Es versteht sich, daß in beiden unterschiedlichen Positionen auch die übrigen bereits oben beschriebenen Manipulationen der Öffnung der Gießform und der verschiedenen Verschwenkungen der Gießformhälften durchführbar sind. Durch die vorstehend beschriebenen Kippbewegungen (Fig. 17 bis 20) kann die Gießform optimal entlüftet werden.

Die Antriebe für die Einzelbewegungen an der Formschließmaschine können elektrisch, hydraulisch oder pneumatisch ausgebildet sein.

### Aufstellung der verwendeten Bezugszeichen

- 1 (1a,b): Gießformteil, Gießformhälfte
- 2: Teilungsfläche
- 3: Halteplatte
- 4: Lagerzapfen
- 5: Halteachse
- 6: Tragrahmen
- 7 (7a,b): Lagerbock (erster, zweiter)
- 8a: Schlitten
- 8b: Schlittenbahn
- 9: Motorantrieb
- 10: Spanneinrichtung
- 11: Schwenkachse
- 12: Schwenkzapfen
- 13: Schwenklager
- 14: Ständer
- 15: Schwenkantrieb
- 16: Formachse
- 17: Linearantrieb
- 18: (erstes) Zahnritzel
- 19: Zahnstange
- 20: Schwenkarm
- 21: Hubeinrichtung
- 22: Grundrahmen
- 23: Wippe
- 23a,b: Wippenarm
- 24: Kippachse
- 25: Kippzapfen
- 26: Zapfenlager
- 27: Stellantrieb
- 28: (zweites) Zahnritzel
- 29: Zahnstangensegment
- 30: Gestellrahmen
- 31: Rahmenprofil
- 32: Gelenk
- 33: Gelenklager
- 34: Hubmotor
- 35: Verriegelung
- 36: Stellmotor
- G: Gießform
- S: Schwenkkreis
- V: Verschieberichtung
- β: Winkel

## Patentansprüche

1. Formschließmaschine mit einer aus zwei Gießformteilen (1) bestehenden Gießform (G), wobei die Gießformteile (1) auf einem gemeinsamen Tragrahmen (6) relativ zueinander verschiebbar angeordnet und an ihrer gemeinsamen Teilungsfläche (2) mittels einer Spanneinrichtung (10) gegeneinander preßbar sind,
dadurch gekennzeichnet, daß
die Gießformteile (1) einzeln oder gemeinsam um jeweils eine Halteachse (5) schwenkbar sind, die mit der Verschieberichtung (V), in der die Gießformteile (1) bewegbar sind, einen - vorzugsweise rechten - Winkel (β) einschließt.

2. Formschließmaschine nach Anspruch 1, dadurch gekennzeichnet, daß der Tragrahmen (6) oder ein die Gießform (G) tragendes Teil des Tragrahmens (6) neigbar und/oder dieser um eine Schwenkachse (11) verdrehbar ist.

3. Formschließmaschine nach Anspruch 2, dadurch gekennzeichnet, daß die Schwenkachse (11) im wesentlichen horizontal angeordnet ist.

4. Formschließmaschine nach Anspruch 2 und 3, dadurch gekennzeichnet, daß die Schwenkachse (11) gegen die Horizontale um einen spitzen Winkel neigbar ist.

5. Formschließmaschine nach einem der Ansprüche 2 bis 4, dadurch gekennzeichnet, daß die Schwenkachse (11) von zwei in jeweils einem Schwenklager (13) gelagerten Schwenkzapfen (12) gebildet wird, die Schwenklager (13) an im wesentlichen senkrechten Ständern (14) einzeln oder gemeinsam höhenbeweglich vorgesehen sind und mindestens ein Schwenkzapfen (12) mit einem Schwenkantrieb (15) antriebsverbunden ist.

6. Formschließmaschine nach einem der Ansprüche 1 bis 5, dadurch gekennzeichnet, daß die Verschieberichtung (V) zu einer an der Gießform (G) ausgebildeten Formachse (16) parallel ist.

7. Formschließmaschine nach einem der Ansprüche 1 bis 6, dadurch gekennzeichnet, daß die Gießformteile (1) an ihrer der gemeinsamen Teilungsfläche (2) abgewandten Seite jeweils an einer Halteplatte (3) befestigt sind.

8. Formschließmaschine nach Anspruch 5, dadurch gekennzeichnet, daß die Halteplatte (3) heizbar ist.

9. Formschließmaschine nach einem der Ansprüche 7 oder 8, dadurch gekennzeichnet, daß die Halteplatten (3) jeweils mittels eines Lagerzapfens (4) oder dergleichen an der unmittelbar oder über einen beweglichen Schlitten (8a) an dem Tragrahmen (6) gelagerten schwenkbaren Halteachse (5) befestigt sind.

10. Formschließmaschine nach einem der Ansprüche 5 bis 9, dadurch gekennzeichnet, daß mindestens eine Halteachse (5) mittels eines ersten Lagerbockes (7a) an dem Tragrahmen (6) und eine weitere Halteachse (5) mittels eines zweiten Lagerbockes (7b) an dem Schlitten (8a) fixiert ist, der auf dem Tragrahmen (6) in der Verschieberichtung (V) beweglich ausgebildet ist.

11. Formschließmaschine nach einem der Ansprüche 1 bis 10, dadurch gekennzeichnet, daß an den Lagerböcken (7) jeweils ein Motorantrieb (9) für die Verschwenkung der Gießformteile (1) um ihre Halteachsen (5) angebracht ist.

12. Formschließmaschine nach einem der Ansprüche 1 bis 11, dadurch gekennzeichnet, daß die Spanneinrichtung (10) an dem Tragrahmen (6) fixiert ist.

13. Formschließmaschine nach Anspruch 12, dadurch gekennzeichnet, daß die Spanneinrichtung (10) als Kolbenmotor ausgebildet ist.

14. Formschließmaschine nach Anspruch 12, dadurch gekennzeichnet, daß die Spanneinrichtung (10) einen Linearantrieb (17) aufweist, wobei ein motorgetriebenes Zahnritzel (18) mit einer Zahnstange (19) zusammenwirkt.

15. Formschließmaschine nach einem der Ansprüche 1 bis 14, dadurch gekennzeichnet, daß sich der Tragrahmen (6) unterhalb der Schwenkachse (11) befindet.

16. Formschließmaschine nach Anspruch 14 oder 15, dadurch gekennzeichnet, daß der Tragrahmen (6) mittels jeweils eines Schwenkarmes (20) an den Schwenkzapfen (12) gehaltert ist.

17. Formschließmaschine nach einem der Ansprüche 14 bis 16, dadurch gekennzeichnet, daß an den Ständern (14) jeweils Hubeinrichtungen (21) zur Anhebung und Absenkung der Schwenklager (13) vorgesehen sind.

18. Formschließmaschine nach einem der Ansprüche 1 bis 17, dadurch gekennzeichnet, daß die Gießformteile (1) einzeln oder gemeinsam um ihre Formachse (16) verschwenkbar sind.

19. Formschließmaschine nach einem der Ansprüche 1 bis 4, 6 bis 15 und 18, dadurch gekennzeichnet, daß der Tragrahmen (6) aus einem Grundrahmen (22) und einer an dem Grundrahmen (22) um eine im wesentlichen horizontale Kippachse (24) schwenkbaren, zweiarmigen Wippe (23) besteht.

20. Formschließmaschine nach Anspruch 19, dadurch gekennzeichnet, daß die Kippachse (24) von Kippzapfen (25) ausgebildet wird, die in an dem Grundrahmen (22) fixierten Zapfenlagern (26) schwenkbar sind.

21. Formschließmaschine nach Anspruch 19 oder 20, dadurch gekennzeichnet, daß die Kippachse (24) quer zu der Formachse (16) ausgebildet ist.

22. Formschließmaschine nach einem der Ansprüche 19 bis 21, dadurch gekennzeichnet, daß an der Wippe (23) ein Stellantrieb (27) zum Kippen der Wippe (23) vorgesehen ist.

23. Formschließmaschine nach Anspruch 22, dadurch gekennzeichnet, daß sich an dem Stellantrieb (27) ein Zahnritzel (28) befindet, das mit einem an dem Grundrahmen (22) fixierten Zahnstangen-Segment (29) zusammenwirkt.

24. Formschließmaschine nach einem der Ansprüche 1 bis 23, dadurch gekennzeichnet, daß auf dem gleichen Tragrahmen (6) mindestens zwei Gießformen (G) vorgesehen sind, wobei die Gießformen (G) wechselweise in Schließstellung und/oder in Öffnungsstellung ihrer Gießformteile (1) halterbar sind.

25. Formschließmaschine nach Anspruch 24, dadurch gekennzeichnet, daß mindestens zwei Gießformen (G) so angeordnet sind, daß ihre Formachsen (16) aufeinander senkrecht stehen.

26. Formschließmaschine nach einem der Ansprüche 1 bis 25, dadurch gekennzeichnet, daß die Verschieberichtung (V) im wesentlichen waagerecht ausgebildet ist.

27. Formschließmaschine nach einem der Ansprüche 1 bis 26, dadurch gekennzeichnet, daß die Halteplatten (3) bei geschlossener Gießform (G) miteinander verriegelbar sind.

28. Formschließmaschine nach einem der Ansprüche 1 bis 27, dadurch gekennzeichnet, daß die Formschließmaschine untere und/oder obere Kernzüge aufweist.
